# EUROPEAN PATENT APPLICATION

(11) **EP 4 451 807 A1**
(43) Date of publication of application: **23.10.2024**
(21) Application number: 22907221.0
(22) Date of filing: 01.12.2022
(51) Int. Cl.: H05B 45/54, B60Q 1/34, B60Q 11/00, H05B 45/345, H05B 45/3725, H05B 45/395, H05B 47/105, H05B 47/165

(54) **LIGHTING CIRCUIT, AND VEHICLE LAMP FITTING**

(30) Priority: 14.12.2021 JP 2021202368
(71) Applicant: KOITO MANUFACTURING CO., LTD., Minato-ku, Tokyo, 108-8711 (JP)
(72) Inventor: OGO, Susumu, Shizuoka-shi, Shizuoka 424-8764 (JP); OHTA, Shinji, Shizuoka-shi, Shizuoka 424-8764 (JP)
(74) Representative: Grünecker Patent- und Rechtsanwälte PartG mbB
(86) International application number: PCT/JP2022/044361
(87) International publication number: WO 2023/112693

(57) **Abstract**

Provided is a lighting circuit which reliably stops operation when an abnormality occurs. The lighting circuit, which is applied to a vehicle lamp fitting, comprises a power supply line to which a power supply voltage is supplied during a first period among a prescribed cycle including the first period and a second period, and to which the supply of the power supply voltage is stopped in the second period, a regulator for supplying a drive current to a light source on the basis of the power supply voltage of the power supply line, a detecting circuit for detecting the presence or absence of an abnormality of the light source, a signal output circuit which operates on the basis of the power supply voltage of the power supply line, for outputting a signal corresponding to a detection result from the detecting circuit, and a control circuit for stopping the operation of the regulator if the signal indicating the presence of an abnormality of the light source is output, wherein, if the detection result indicating the presence of an abnormality of the light source is input during the first period, the signal output circuit holds the signal indicating the presence of the abnormality of the light source, irrespective of whether the power supply voltage is being supplied to the power supply line.

## Description

### TECHNICAL FIELD

The invention relates to a lighting circuit and a vehicle lighting tool.

### BACKGROUND ART

A lighting circuit used in a vehicle direction indicator light (one type of a vehicle lighting tool) includes a regulator that generates driving current on the basis of voltage (hereinafter turn voltage) including a high-level period of time and a low-level period of time in a predetermined cycle, and lights up (flashes) a light source by supplying driving current to the light source. In Patent Literature 1, a holding circuit that holds a signal (logic level) indicating an abnormality and stops the operation of the regulator at the time of occurrence of an abnormality is provided.

### [Citation List]

### [Patent Literature]

[Patent Literature 1] Japanese Unexamined Patent Application Publication No. 2021-113038

### SUMMARY OF THE INVENTION

### [Technical Problem]

In the holding circuit of the related art, even when a signal indicating an abnormality is held when an abnormality is detected, there is a concern that the holding state is released in the low-level period of time. In this case, the lighting circuit may operate again after the low-level period of time is switched to the high-level period of time.

An object of the present invention is to provide a lighting circuit capable of reliably stopping an operation at the time of occurrence of an abnormality.

### [Solution to Problem]

The present main invention that achieves the object is a lighting circuit applied to a vehicle lighting tool. The lighting circuit includes: a power supply line to which power supply voltage is supplied in a first period of time out of a predetermined cycle including the first period of time and a second period of time, the supply of the power supply voltage being stopped in the second period of time; a regulator that supplies driving current to a light source based on the power supply voltage across the power supply line; a detection circuit that detects whether there is an abnormality in the light source; a signal output circuit that operates based on the power supply voltage across the power supply line and outputs a signal according to a detection result of the detection circuit; and a control circuit that stops an operation of the regulator when the signal indicating that there is an abnormality in the light source is output. In the lighting circuit, the signal output circuit holds, when the detection result indicating that there is an abnormality in the light source is input in the first period of time, the signal indicating that there is an abnormality in the light source regardless of whether the power supply voltage is supplied to the power supply line.

### [Advantageous Effects of Invention]

According to the present invention, it becomes possible to provide the lighting circuit that reliably stops the operation at the time of occurrence of an abnormality.

### BRIEF DESCRIPTION OF THE DRAWINGS

[FIG. 1] FIG. 1 is a diagram showing one example of a configuration of a vehicle lighting tool system including a turn signal lamp 10 of an embodiment of the present invention.
[FIG. 2] FIG. 2 is a diagram showing one example of a configuration of a disconnection detection circuit 45.
[FIG. 3] FIG. 3 is a diagram showing one example of a configuration of a light-off circuit 47.
[FIG. 4] FIG. 4 is a diagram for describing an operation of a lighting circuit 30.
[FIG. 5] FIG. 5 is a diagram for describing an effect of a diode D13.

### MODES FOR CARRYING OUT THE INVENTION

At least the features below will become clear by description of the specification and the accompanying drawings.

### Present Embodiment

### System Configuration

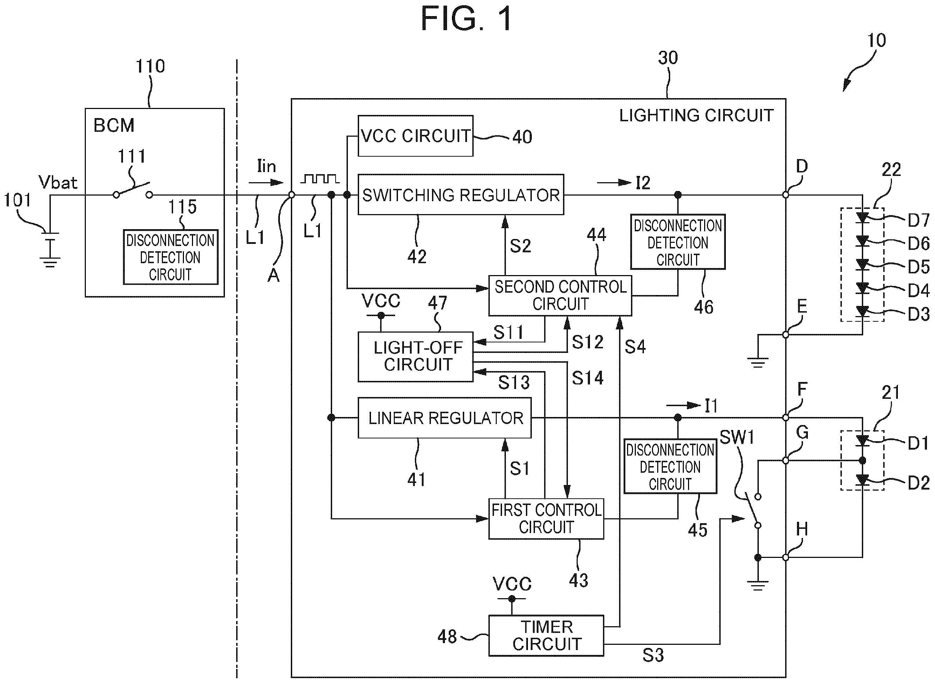

FIG. 1 is a diagram showing one example of a configuration of a vehicle lighting tool system including a turn signal lamp 10 of an embodiment of the present invention. The system shown in FIG. 1 includes a body control module (BCM) 110 provided on the vehicle side and the turn signal lamp 10 on the lamp side. The turn signal lamp 10 is equivalent to a "vehicle lighting tool".

The BCM 110 is an electronic control unit (control apparatus) that monitors and controls various electronic devices (a wiper, a door lock, lighting, and the like) of a vehicle. The BCM 110 of the present embodiment has a switch 111 and a disconnection detection circuit 115.

The switch 111 is an element for applying power supply voltage Vbat (hereinafter also simply referred to as voltage Vbat) across a vehicle battery 101 to a power supply line L1 of the turn signal lamp 10. As the switch 111, a mechanical contact relay, a contactless relay using a semiconductor, and the like are employed, for example. The voltage Vbat across the battery 101 is applied to one end of the switch 111, and the other end is connected to the power supply line L1. Therefore, when the switch 111 is turned on, the voltage Vbat is applied to the power supply line L1. In the present embodiment, all lines (the inner side and the outer side of a lighting circuit 30) connected to the switch 111 are referred to as the power supply line L1. In particular, the inner side of the lighting circuit 30 is also the power supply line L1. The power supply line L1 is wiring that supplies power supply voltage to a circuit on the inside of the lighting circuit 30 via a terminal A (described later).

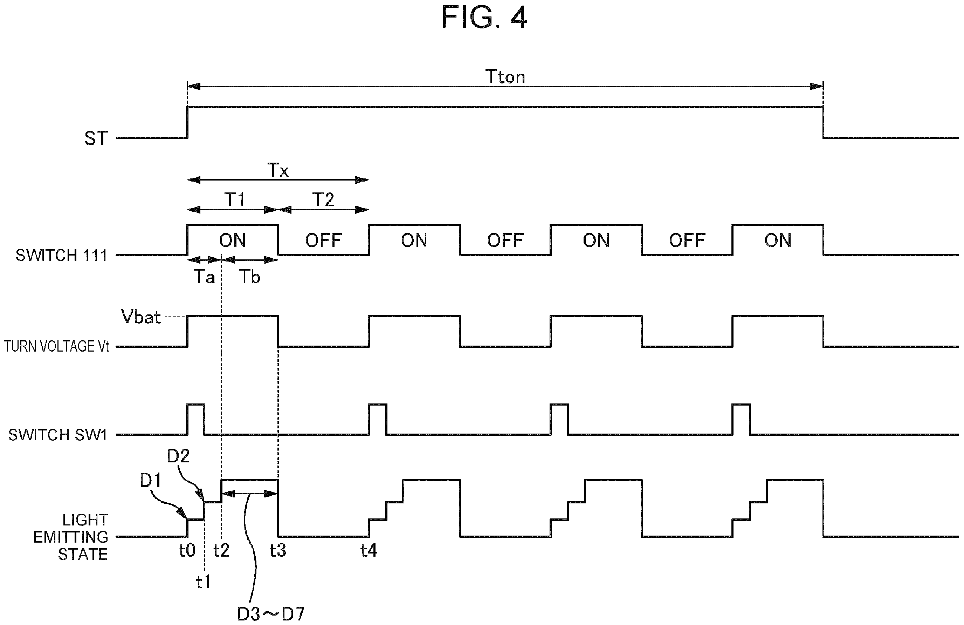

For example, when a driver of the vehicle operates a direction indicator (not shown) in order to light up the turn signal lamp 10, a turn switch (not shown) is turned on, and a turn signal ST (see FIG. 4) reaches a high level (hereinafter an H-level). When the turn signal ST is at an H-level, a control circuit (not shown) of the vehicle turns the switch 11 on and off.

As a result, voltage (hereinafter also referred to as turn voltage Vt) with which a period of time of the H-level and a period of time of a low level (hereinafter an L-level) are repeated at a cycle Tx is generated and is applied to the power supply line L1. In other words, the turn voltage Vt is voltage of the cycle Tx including the period of time of the H-level and the period of time of the L-level, the voltage Vbat is supplied to the power supply line L1 in the period of time of the H-level, and the supply of the voltage Vbat to the power supply line L1 is stopped in the period of time of the L-level. The period of time in which the turn voltage Vt is at an H-level is equivalent to a "first period of time", and the period of time in which the turn voltage Vt is at an L-level is equivalent to a "second period of time".

The disconnection detection circuit 115 is a circuit that detects whether there is a disconnection on the lamp side (specifically, a light emitting element of the turn signal lamp 10 described below) on the basis of current (input current Iin) that flows through the power supply line L1. In the present embodiment, the disconnection detection circuit 115 is provided in the BCM 110 but is not limited thereto, and may be provided outside the BCM 110.

### Configuration of Turn Signal Lamp 10

The turn signal lamp 10 is a vehicle direction indicator light (vehicle lighting tool) that lights up a light emitting element of a light source in a sequential manner on the basis of the voltage Vbat across the vehicle battery 101. In the present embodiment, a sequential type is exemplified as the turn signal lamp 10, but the turn signal lamp 10 is not limited to the sequential type and may be other types.

The turn signal lamp 10 is configured to include a first light source 21, a second light source 22, and the lighting circuit 30.

The first light source 21 is a light source including two light emitting elements, that is, a light emitting element D1 that is lit up first and a light emitting element D2 that is lit up after the light emitting element D1. Light emitting diodes (LEDs) are used as the light emitting elements D1, D2 of the present embodiment. However, the light emitting elements D1, D2 are not limited to LEDs and may be other semiconductor light emitting elements such as a laser diode (LD) and an organic EL element, a halogen lamp, or the like (the same applies to light emitting elements D3 to D7 of the second light source 22 described below), for example. The light emitting elements D1, D2 are connected in series between a terminal F and a terminal H, and a cathode of the light emitting element D1 and an anode of the light emitting element D2 are connected to a terminal G.

The second light source 22 is a light source including a plurality of (five here) the light emitting elements D3 to D7 lit up after the light emitting element D2 of the first light source 21 is lit up. The light emitting elements D3 to D7 are connected in series between a terminal D and a terminal E. Each of the first light source 21 and the second light source 22 is equivalent to a "light source".

The lighting circuit 30 sequentially lights up the first light source 21 and the second light source 22 at predetermined timings when the voltage Vbat is applied to the power supply line L1 (in other words, when the turn voltage Vt reaches an H-level). Details of the lighting circuit 30 are described below, but the lighting circuit 30 is a module in which a plurality of circuits for lighting up the first light source 21 and the second light source 22 (light emitting elements D1 to D7) and the terminals A to H are attached to a substrate.

### Configuration of Lighting Circuit 30

As shown in FIG. 1, the lighting circuit 30 is configured to include a VCC circuit 40, a linear regulator 41, a switching regulator 42, a first control circuit 43, a second control circuit 44, disconnection detection circuits 45, 46, a light-off circuit 47, a timer circuit 48, a switch SW1, and the terminals A to H.

The VCC circuit 40 is a power supply circuit that generates voltage VCC (for example, 5 V) for operating each circuit of the lighting circuit 30 on the basis of the turn voltage Vt (for example, the voltage Vbat of 12 V) across the power supply line L1.

The linear regulator 41 is a linear constant current circuit that generates predetermined driving current I1 for driving the light emitting elements D1, D2 of the first light source 21 that is a load. Specifically, the linear regulator 41 generates the predetermined driving current I1 on the basis of electric power supplied from the power supply line L1 when the switch 111 is turned on and the voltage Vbat is applied to the power supply line L1. The operation of the linear regulator 41 is controlled by the first control circuit 43.

The switching regulator 42 is a switching constant current circuit that generates predetermined driving current I2 for driving the light emitting elements D3 to D7 of the second light source 22 that is a load. The switching regulator 42 is a constant current circuit that generates the driving current I2 on the basis of electric power supplied from the power supply line L1. The operation of the switching regulator 42 is controlled by the second control circuit 44.

In the present embodiment, each of the linear regulator 41 and the switching regulator 42 is equivalent to a "regulator", and the driving current I1, I2 generated by each regulator is equivalent to "driving current". The linear regulator 41 that supplies the driving current I1 to the first light source 21 is equivalent to a "first regulator", and the driving current I1 is equivalent to "first driving current". The switching regulator 42 that supplies the driving current I2 to the second light source 22 is equivalent to a "second regulator", and the driving current I2 is equivalent to "second driving current".

The first control circuit 43 outputs a signal S1 to the linear regulator 41 in order to generate the driving current I1, and controls the operation of the linear regulator 41.

The first control circuit 43 outputs a signal S13 indicating a detection result of the disconnection detection circuit 45 to the light-off circuit 47, and stops the operation of the linear regulator 41 when a signal S14 output from the light-off circuit 47 reaches an L-level.

The second control circuit 44 outputs a signal S2 to the switching regulator 42 and controls the operation of the switching regulator 42. The second control circuit 44 controls the operation of the switching regulator 42 on the basis of a signal S4 input from the timer circuit 48. The signal S4 is a signal that instructs an operation timing of the switching regulator 42.

The second control circuit 44 outputs a signal S11 indicating a detection result of the disconnection detection circuit 46 to the light-off circuit 47, and stops the operation of the switching regulator 42 when a signal S12 output from the light-off circuit 47 reaches an L-level.

Each of the first control circuit 43 and the second control circuit 44 is equivalent to a "control circuit". Each of the signals S14, S12 at an L-level is equivalent to "a signal indicating that there is an abnormality in a light source" and is equivalent to "a signal indicating that there is an abnormality in either of the first light source or the second light source".

The disconnection detection circuit 45 detects whether there is a disconnection in the light emitting elements D1, D2 of the first light source 21 (in other words, whether there is an abnormality in the first light source 21) on the basis of the output voltage of the linear regulator 41. Here, when either of the light emitting elements D1, D2 is disconnected, the output voltage across the terminal F rises, and hence the disconnection detection circuit 45 can detect the disconnection (details are described below).

The disconnection detection circuit 45 of the present embodiment determines whether the output voltage of the linear regulator 41 is higher than a predetermined value V1, and detects that there is a disconnection in the first light source 21 when the output voltage becomes higher than the predetermined value V1, for example.

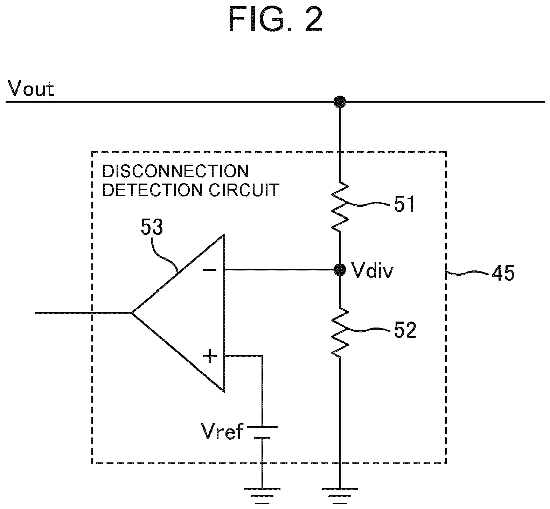

FIG. 2 is a diagram showing one example of a configuration of the disconnection detection circuit 45. The disconnection detection circuit 45 shown in FIG. 2 has resistors R51, R52 and a comparator 53. The disconnection detection circuit 46 described later can also be similarly configured.

The resistors R51, 52 are resistors that divide output voltage Vout across the linear regulator 41 and are connected in series between an output line of the linear regulator 41 and ground.

In the comparator 53, voltage Vdiv (divided voltage of the output voltage Vout) across a connection point between the resistor 51 and the resistor 52 is applied to an inverting input terminal (- terminal) and voltage Vref is applied to a non-inverting input terminal (+ terminal). In the present embodiment, the voltage level of the voltage Vref and resistance values of the resistors 51, 52 are defined such that the voltage Vdiv becomes higher than the voltage Vref when the output voltage Vout becomes higher than a predetermined voltage (the predetermined value V1 here).

Then, the comparator 53 compares the voltage Vdiv and the voltage Vref with each other, and the signal at an L-level is output when the voltage Vdiv is higher than the voltage Vref. When the voltage Vdiv is lower than the voltage Vref, a signal at an H-level is output. In other words, the output of the disconnection detection circuit 45 reaches an H-level when there are no abnormalities in the first light source 21 (a disconnection in the light emitting element), and the output of the disconnection detection circuit 45 reaches an L-level when there is an abnormality in the first light source 21.

The disconnection detection circuit 46 detects whether there is a disconnection in the light emitting elements D3 to D7 of the second light source 22 (in other words, whether there is an abnormality in the second light source 22) on the basis of the output voltage across the switching regulator 42. Specifically, as with the disconnection detection circuit 45, the disconnection detection circuit 46 detects that there is a disconnection in the second light source 22 when the output voltage across the switching regulator 42 becomes higher than a predetermined value V2. The output of the disconnection detection circuit 46 reaches an H-level when there are no abnormalities in the second light source 22 (a disconnection in the light emitting element), and the output of the disconnection detection circuit 46 reaches an L-level when there is an abnormality in the second light source 22 in this case as well. Each of the disconnection detection circuits 45, 46 is equivalent to a "detection circuit". The disconnection detection circuit 45 is equivalent to a "first detection circuit", and the disconnection detection circuit 46 is equivalent to a "second detection circuit".

The timer circuit 48 is a circuit for executing a sequential light-up operation. The timer circuit 48 operates on the basis of voltage VCC, and measures the amount of time from when the turn voltage Vt has changed. The timer circuit 48 changes the level of the signal S3 output to the switch SW1 and changes the level of the signal S4 output to the second control circuit 44 at an appropriate timing.

The switch SW1 is an element for sequentially lighting up the light emitting elements D1, D2 of the first light source 21, and is turned on when the signal S3 of the timer circuit 48 reaches an H-level and is turned off when the timer circuit 48 reaches an L-level. Here, the switch SW1 is provided between the terminals G, H such that the switch SW1 and the light emitting element D2 are parallelly connected. Therefore, when the switch SW1 is turned on, the driving current I1 is supplied to only the light emitting element D 1 out of the light emitting elements D1, D2, and the driving current I1 is supplied to both of the light emitting elements D1, D2 when the switch SW1 is turned off.

### Configuration of Light-off Circuit 47

The light-off circuit 47 is a circuit that stops the operation of the linear regulator 41 and the switching regulator 42 in order to put out the light of the first light source 21 and the second light source 22 when either of the disconnection detection circuits 45, 46 detects a disconnection. Here, the expression of "stopping the operation of the regulator" means that the regulator at least stops the generation of driving current and is placed in a state in which the input current Iin does not flow (for example, a standby state), for example.

The light-off circuit 47 operates on the basis of the voltage VCC and outputs the signals S12, S14 according to detection results of the disconnection detection circuits 45, 46. The light-off circuit 47 is equivalent to a "signal output circuit".

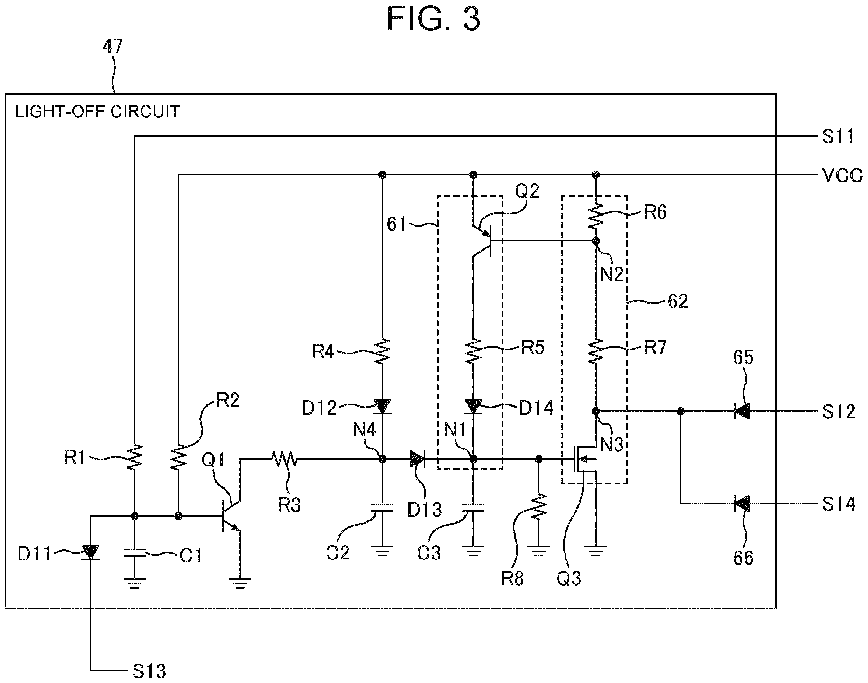

FIG. 3 is a diagram showing one example of a configuration of the light-off circuit 47.

The light-off circuit 47 is configured to include an NPN transistor Q1, a PNP transistor Q2, an NMOS transistor Q3, capacitors C1 to C3, diodes D11 to D14, resistors R1 to R8, and diodes 65, 66.

An inverter 61 is configured by the PNP transistor Q2, the resistor R5, and the diode D14, and an inverter 62 is configured by resistors R6, R7 and the NMOS transistor Q3.

The inverter 61 is a circuit that performs output by inverting the logic level of a node N2 that is an output of the inverter 62 and includes the PNP transistor Q2, the resistor R5, and the diode D14 connected to a supply line of the voltage VCC in series. For example, when the level of the node N2 of the inverter 62 is at an H-level, the PNP transistor Q2 is turned off, and hence the node N1 on the cathode side of the diode D14 reaches an L-level. Meanwhile, when the level of the node N2 is at an L-level, the PNP transistor Q2 is turned on, and hence the node N1 reaches an H-level.

The inverter 62 is a circuit that performs output by inverting the logic level of the node N1 and includes the NMOS transistor Q3 and the resistors R6, R7 connected to a supply line of the voltage VCC in series. Here, when the level of the node N1 is an H-level, the NMOS transistor Q3 is turned on, for example. Therefore, the levels of the node N2 and a node N3 to which the NMOS transistor Q3 and the resistor R7 are connected both become an L-level. When the level of the node N1 is an L-level, the NMOS transistor Q3 is turned off, and hence the levels of the nodes N2, N3 both become an H-level.

In the present embodiment, the node N1 that is an output of the inverter 61 is connected to a gate electrode of the NMOS transistor Q3 that is an input of the inverter 62. The node N2 that is an output of the inverter 62 is connected to a base electrode of the PNP transistor Q2 that is an input of the inverter 61. Therefore, the inverters 61, 62 operate as circuits that hold the logic level.

In the present embodiment, the inverters 61, 62, and the capacitor C3 described below, and the resistor R8 are equivalent to a "holding circuit". The NMOS transistor Q3 is equivalent to a "first transistor", and the gate electrode of the NMOS transistor Q3 is equivalent to a "control electrode".

The capacitor C3 and the resistor R8 are circuits (time constant circuits) provided to define the period of time (time constant) by which the logic level is held by the inverters 61, 62.

In the capacitor C3, one end is connected to the node N1 (in other words, the gate electrode of the NMOS transistor Q3) and another end is grounded. Therefore, when the charging voltage across the capacitor C3 reaches a predetermined level (a threshold value of the NMOS transistor Q3), the state (an on state, an off state) of the NMOS transistor Q3 changes. The capacitor C3 is equivalent to a "first capacitor".

The resistor R8 is parallelly connected to the capacitor C3. The resistor R8 of the present embodiment has a resistance value with which the charging voltage across the capacitor C3 does not become lower than the threshold value of the NMOS transistor Q3 during a period of time in which the turn voltage Vt is at an L-level (a period of time in which the voltage Vbat is not supplied: a period of time T2 described later). The resistor R8 is equivalent to a "first resistor".

An emitter electrode of the NPN transistor Q1 is grounded, and a collector electrode is connected to a node N4 between the resistor R4 (and a diode D12) and the capacitor C2 via the resistor R3. The NPN transistor Q1 is equivalent to a "second transistor", and the node N4 is equivalent to a "node" to which the NPN transistor Q1 and the resistor R4 are connected.

A base electrode of the NPN transistor Q1 is connected to another end of the resistor R2 having one end to which the voltage VCC is applied. The base electrode of the NPN transistor Q1 is connected to another end of the resistor R1 having one end to which the signal S11 is applied, and is connected to an anode of the diode D11 having a cathode to which the signal S13 is applied. The base electrode of the NPN transistor Q1 is connected to the capacitor C1 for smoothing of the input signals (the signals S11, S13).

The resistor R4, the diode D12, and the capacitor C2 are connected in series.

When the NPN transistor Q1 is turned off, the resistor R4 supplies charging current to the capacitor C2 and the capacitor C3 via the diode D12. As a result, the capacitors C2, C3 are charged. The resistor R4 is equivalent to a "second resistor", and the circuit including the NPN transistor Q1 and the resistor R4 is equivalent to a "charging circuit".

The diode D13 is an element (element for prevention) for preventing the electric charge accumulated in the capacitor C3 from being discharged and the holding state from being released when the NPN transistor Q1 is turned on. An anode of the diode D13 is connected to the node N4, and a cathode is connected to the node N1 (in other words, the capacitor C3).

The diode 65 generates the signal S 12 at an L-level for causing the second control circuit 44 to stop the operation of the linear regulator 41 at the anode when there is a disconnection detection and the voltage across the node N3 reaches an L-level.

The diode 66 generates the signal S14 at an L-level for causing the first control circuit 43 to stop the operation of the switching regulator 42 at the anode when there is a disconnection detection and the voltage across the node N3 reaches an L-level.

### Operation of Lighting Circuit 30

FIG. 4 is a diagram for describing an operation of the lighting circuit 30. Here, for example, when the direction indicator (not shown) for flashing the turn signal lamp 10 is operated, the turn switch (not shown) is turned on and the turn signal ST reaches an H-level.

The switch 111 of the present embodiment is controlled to repeat turn-on and turn-off at a predetermined cycle Tx (for example, 800 ms) in a period of time Tton in which the turn signal ST is at an H-level. Out of the cycle Tx, each of the periods of time in which the switch 111 is turned on and turned off is a period of time (400 ms) that is half of the cycle Tx. The voltage Vbat is supplied to the power supply line L1 in the period of time (period of time T1) in which the switch 111 is turned on, and the supply of the power supply voltage Vbat is stopped in the period of time (period of time T2) in which the switch 111 is turned off.

The first control circuit 43 and the second control circuit 44 control various circuits and elements such that the number of the light emitting elements to be lit up while the switch 111 is turned on increases in the manner of "one", "two", and "seven". In the present embodiment, out of the period of time T1, the period of time for lighting up the first light source 21 and the second light source 22 is a period of time Ta (Only needs to be within 200 ms. For example, 150 ms), and the period of time in which the first light source 21 and the second light source 22 are lit up is a period of time Tb (for example, 250 ms). Here, none of the light emitting elements D1 to D7 is disconnected, and hence the light-off circuit 47 holds the signal at an H-level.

First, at a time point t0, when the direction indicator (not shown) for flashing the turn signal lamp 10 is operated (the turn signal ST reaches an H-level), the switch 111 is controlled to be turned on. As a result, the turn voltage Vt reaches an H-level, and the voltage Vbat across the battery 101 is supplied to the power supply line L1. The first control circuit 43 operates the linear regulator 41.

At the time point t0, the timer circuit 48 causes the signal S3 to the switch SW1 to reach an H-level and turns on the switch SW1. As a result, the driving current I1 is supplied to only the light emitting element D1 out of the light emitting elements D1, D2 of the first light source 21, and one light emitting element (light emitting element D1) is lit up.

When a time point t1 at which a period of time Ta/2 has elapsed from the time point t0 is reached, the timer circuit 48 changes the signal S3 to an L-level and turns off the switch SW1. As a result, the driving current I1 is supplied to the light emitting elements D1, D2 of the first light source 21, and two light emitting elements (light emitting elements D1, D2) are lit up.

When a time point t2 at which the period of time Ta/2 has elapsed from the time point t1 is reached, the second control circuit 44 operates the switching regulator 42 on the basis of the signal S4 from the timer circuit. As a result, the driving current I2 is supplied to the light emitting elements D3 to D7 of the second light source 22, and seven light emitting elements (light emitting elements D1 to D7) are lit up.

When a time point t3 at which the period of time Tb has elapsed from the time point t2 is reached, the switch 111 is controlled to be turned off. As a result, the turn voltage Vt reaches an L-level (ground level), and the supply of the power supply to the turn signal lamp 10 is stopped, and hence the operation of the linear regulator 41, the switching regulator 42, and the like is stopped. Therefore, the supply of the driving current I1 to the light emitting elements D1, D2 and the supply of the driving current I2 to the light emitting elements D3 to D7 are also stopped, and hence the light of the first light source 21 and the second light source 22 is put out.

When a time point t4 at which the period of time T2 (for example, 400 ms) has elapsed from the time point t3 at which the light of the first light source 21 and the second light source 22 is put out is reached, the switch 111 is controlled to be turned on again. Therefore, from the time point t4 and thereafter, the operation of the time point t0 to the time point t4 is repeated at the cycle Tx.

### Operation of Light-off Circuit 47

In FIG. 4, it has been described that none of the light emitting elements D1 to D7 is disconnected, but the light-off circuit 47 stops the operation of the linear regulator 41 and the switching regulator 42 when any of the light emitting elements D1 to D7 is disconnected, for example. The operation of the light-off circuit 47 is described below.

### State before Disconnection is Detected

When the disconnection is not detected in the period of time T1, the voltage VCC (for example, 5 V) is applied to the base electrode of the NPN transistor Q1 via the resistor R2, and the NPN transistor Q1 is turned on. As a result, the charging voltage across the capacitor C2 is discharged via the resistor R3 and the NPN transistor Q1. The charging voltage across the capacitor C3 is lower than the threshold voltage of the NMOS transistor Q3, the voltage across the node N1 is at an L-level, the NMOS transistor Q3 is turned off, and the nodes N2, N3 (the output of the light-off circuit 47) reach an H-level. As a result of the node N2 reaching an H-level, the PNP transistor Q2 is turned off.

### When Disconnection is Detected on Second Light Source 22 Side

When an abnormality in the second light source 22 is detected by the disconnection detection circuit 46 and the signal S11 reaches an L-level, the NPN transistor Q1 is turned off. As a result, the capacitor C2 and the capacitor C3 are charged, the node N1 reaches an H-level, the NMOS transistor Q3 is turned on, and the nodes N2, N3 reach an L-level. As a result of the node N2 reaching an L-level, the PNP transistor Q2 is turned on. As a result of the node N3 being at an L-level, the diodes 65, 66 respectively generate the signal S12 and S14 at an L-level indicating an abnormality at an anode.

In other words, the light-off circuit 47 outputs the signal S12 at an L-level to the first control circuit 43 and outputs the signal S14 at an L-level to the second control circuit 44. As a result, the first control circuit 43 stops the operation of the linear regulator 41, and the second control circuit 44 stops the operation of the switching regulator 42.

### When Disconnection is Detected on First Light Source 21 Side

When an abnormality in the first light source 21 is detected by the disconnection detection circuit 45 and the signal S13 reaches an L-level, current flows to the supply line of the signal S13 from the side of the base electrode of the NPN transistor Q1 via the diode D11. As a result, the voltage across the base electrode of the NPN transistor Q1 becomes forward voltage (for example, 0.6 V) across the diode D11, and the NPN transistor Q1 is turned off. The following is similar to the case in which the signal S11 reaches an L-level. The diodes 65, 66 respectively generate the signals S12, S14 at an L-level indicating an abnormality at an anode in this case as well.

The light-off circuit 47 outputs the signal S12 at an L-level to the first control circuit 43 and outputs the signal S14 at an L-level to the second control circuit 44 in this case as well. As a result, the first control circuit 43 stops the operation of the linear regulator 41, and the second control circuit 44 stops the operation of the switching regulator 42.

In the present embodiment, the capacitor C3 and the resistor R8 are provided in the light-off circuit 47. As a result, even in a period of time in which the voltage VCC is not supplied, a signal at an L-level indicating an abnormality can be held for a predetermined period of time. In the present embodiment, a capacitance value of the capacitor C2 and a resistance value of the resistor R8 are defined such that the output of the signal at an L-level can be held at least during the period of time in which the turn voltage Vt is at an L-level (400 ms) (preferably the cycle Tx or more of the turn voltage Vt). As a result, the operation of the lighting circuit 30 can be reliably stopped at the time of occurrence of an abnormality.

In order to recover from the holding state, the turn signal ST is caused to be at an L-level for the cycle Tx or more by the operation of the direction indicator. As a result, the charging voltage across the capacitor C3 is discharged via the resistor R8, the voltage across the node N1 becomes lower than a threshold value of the NMOS transistor Q3, and the holding state is released. Then, the turn signal ST only needs to be set to an H-level again.

In the present embodiment, the diode D13 is provided between the node N4 and the node N1 (in other words, the capacitor C3) of the light-off circuit 47. This is because, when the diode D13 is not provided, the NPN transistor Q1 is turned on at a timing at which the turn voltage Vt reaches an H-level, and there is a concern that the charging voltage across the capacitor C3 is discharged and the holding state is released. When the holding state is released, the input current Iin flows to the lighting circuit 30, and hence there is a concern that the disconnection detection circuit 115 on the vehicle side falsely detects that there are no disconnections.

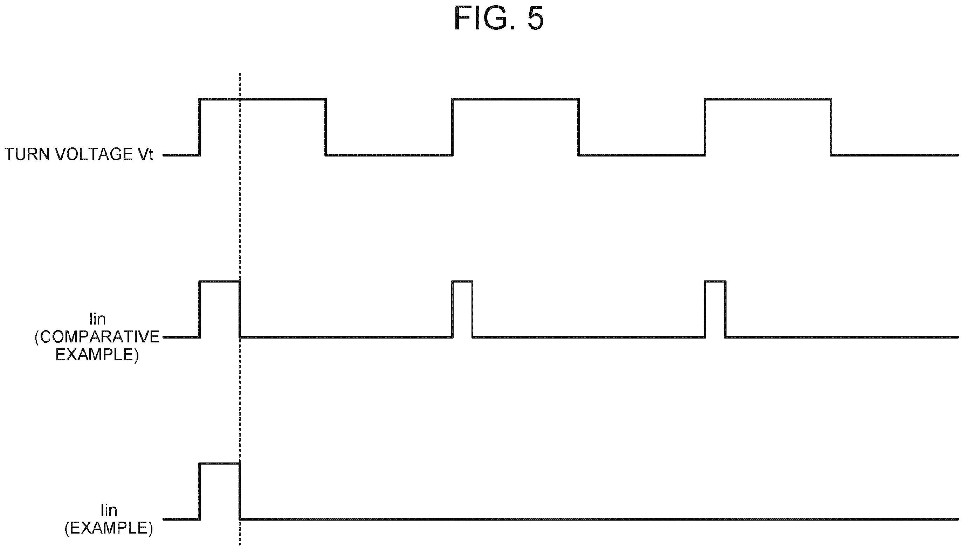

FIG. 5 is a diagram for describing an effect of the diode D13. The upper stage of the drawing indicates the turn voltage Vt, the middle stage indicates the input current Iin of a case in which the diode D13 is not provided (comparative example), and the lower stage indicates the input current Iin of a case in which the diode D13 is provided (Example).

When a disconnection is detected at a time point indicated by a broken line in a period of time in which the turn voltage Vt is at an H-level (the output of either of the disconnection detection circuits 45, 46 reaches an L-level), the light-off circuit 47 stops the operation of the linear regulator 41 and the switching regulator 42, and hence the input current Iin does not flow. As a result of the operation of the linear regulator 41 and the switching regulator 42 stopping (the output voltage becoming zero), both of the outputs of the disconnection detection circuits 45, 46 reach an H-level.

When the turn voltage Vt reaches an L-level, the voltage VCC is not supplied. However, in the present embodiment, the capacitor C3 is charged, and hence the NMOS transistor Q3 holds an on state.

In the case of the comparative example (when the diode D13 is not provided), the voltage VCC is supplied and the NPN transistor Q1 is turned on at the next timing at which the turn voltage Vt reaches an H-level. As a result, the electric charge of the capacitor C3 is discharged via the NPN transistor Q1. Therefore, the holding state is released, and the input current Iin flows as shown in FIG. 5. Similarly, the holding state is released and the input current Iin flows each time the turn voltage Vt reaches an H-level below. In such a case, there is a concern that the disconnection detection circuit 115 on the vehicle side performs false detection as a result of the input current Iin flowing.

Meanwhile, in the present embodiment, the diode D13 is provided. As a result, even when the voltage VCC is supplied and the NPN transistor Q1 is turned on at the next timing at which the turn voltage reaches an H-level, the electric charge of the capacitor C3 is not discharged. Therefore, the holding state is reliably continued, and a state in which the input current Iin does not flow is maintained as shown in the drawing. As a result, false detection by the disconnection detection circuit 115 can be prevented. The diode D13 does not necessarily need to be provided. For example, when the time constants of the capacitor C3 and the resistor R8 are extremely great, the diode D13 is unnecessary.

### Other Embodiments

For example, the first light source 21 includes two light emitting elements D1, D2 and the second light source includes five light emitting elements D3 to D7, but are not limited thereto. For example, the first light source 21 may include three light emitting elements.

In the embodiment described above, the light emitting elements D3 to D7 of the second light source 22 are simultaneously lit up at the time point t2. However, switches may be respectively provided in parallel to the light emitting elements D3 to D7, and the light emitting elements D3 to D7 may be sequentially lit up according to the control of each switch.

In the present embodiment, two light sources, that is, the first light source 21 and the second light source 22 are provided, but the number of the light sources is not limited thereto and may be one or three or more. When the number of the light sources is one, the number of each of the regulator, the disconnection detection circuit, and the control circuit may be one. When the number of the light sources is three, the regulator, the disconnection detection circuit, and the control circuit only need to be provided to respectively correspond to the light sources as with the present embodiment, and the light of all of the light sources only need to be put out when a disconnection is detected in at least one.

In the lighting circuit 30, the linear regulator 41 is provided as a regulator that supplies the driving current I1 to the first light source 21, and the switching regulator 42 is provided as a regulator that supplies the driving current I2 to the second light source 22, but the present invention is not limited thereto. For example, the linear regulator and the switching regulator may be reversed or may be the same type of regulators. Regulators other than the linear regulator and the switching regulator may be used.

### Conclusion

The turn signal lamp 10 of the present embodiment has been described above. The lighting circuit 30 includes: the power supply line L1 to which the power supply voltage Vbat is supplied in the period of time T1 out of the cycle Tx including the period of time T1 and the period of time T2, the supply of the power supply voltage Vbat being stopped in the period of time T2; the linear regulator 41 that supplies driving current I1 to the light source (the first light source 21 here) based on the power supply voltage Vbat across the power supply line L1; the disconnection detection circuit 45 that detects whether there is an abnormality in the first light source 21; the light-off circuit 47 that operates based on the power supply voltage Vbat across the power supply line L1 and outputs the signal S14 according to the detection result of the disconnection detection circuit 45; and the first control circuit 43 that stops the operation of the linear regulator 41 when the signal S14 indicating that there is an abnormality is output to the first light source 21. The light-off circuit 47 holds, when the detection result indicating that there is an abnormality in the first light source 21 is input in the period of time T1, the signal S14 indicating that there is an abnormality in the first light source 21 regardless of whether the power supply voltage Vbat is supplied to the power supply line L1. As a result, the operation of the linear regulator 41 can also be reliably stopped during the period of time T2. Therefore, the lighting circuit 30 can reliably stop the operation at the time of occurrence of an abnormality.

The light-off circuit 47 includes: the charging circuit that charges the capacitor C3 when the detection result (signal S13) indicating that there is an abnormality in the first light source 21 is input in the period of time T1; and the holding circuit (the inverters 61, 62 and the like) that includes the capacitor C3 and holds the signal S14 indicating that there is an abnormality in the first light source 21 when charging voltage across the capacitor C3 reaches a predetermined level. As a result, the signal S14 indicating that there is an abnormality can also be held during the period of time T2 in which the power supply voltage Vbat is not supplied.

The holding circuit includes: the NMOS transistor Q3 that has a gate electrode connected to the capacitor C3 and changes a state when the charging voltage across the capacitor C3 reaches the predetermined level (threshold voltage); and the resistor R8 parallelly connected to the capacitor C3. The resistor R8 has a resistance value with which the charging voltage across the capacitor C3 does not become lower than the predetermined level during the period of time T2. As a result, the NMOS transistor Q3 can hold the state of being on during the period of time T2.

The charging circuit includes: the NPN transistor Q1 that is turned off based on the detection result (signal S13) indicating that there is an abnormality in the first light source in the period of time T1; and the resistor R4 that supplies the charging current to the capacitor C3 when the NPN transistor Q1 is turned off. As a result, the capacitor C3 can be charged by turning off the NPN transistor Q1 when an abnormality is detected in the period of time T1.

The light-off circuit 47 further includes: the capacitor C2 connected to the node N4 to which the NPN transistor Q1 and the resistor R4 are connected; and the diode D13 having an anode connected to the node N4 and a cathode connected to the capacitor C3. As a result, the charging voltage across the capacitor C3 can be prevented from being discharged via the NPN transistor Q1 and the holding state can be prevented from being released when the turn voltage Vt is switched from the L-level to the H-level.

The turn signal lamp 10 of the present embodiment includes the first light source 21 and the second light source as the light sources, and includes: the linear regulator 41 that supplies the driving current I1 to the first light source 21 based on the power supply voltage Vbat across the power supply line L1; the disconnection detection circuit 45 that detects whether there is an abnormality in the first light source 21; the switching regulator 42 that supplies the driving current I2 to the second light source 22 based on the power supply voltage Vbat across the power supply line L1; and the disconnection detection circuit 46 that detects whether there is an abnormality in the second light source 22. The light-off circuit 47 operates based on the power supply voltage Vbat across the power supply line L1, and outputs the signals S12, S14 based on the detection result (signal S13) of the disconnection detection circuit 45 and the detection result (signal S 11) of the disconnection detection circuit 46.

The first control circuit 43 that stops the operation of the linear regulator 41 and the second control circuit 44 that stops the operation of the switching regulator 42 when the signals (signals S12, S14) indicating that there is an abnormality in either of the first light source 21 or the second light source 22 are output are further included.

The light-off circuit 47 holds the signals (signals S12, S14) indicating that there is an abnormality in either of the first light source 21 or the second light source 22 regardless of whether the power supply voltage Vbat is supplied to the power supply line L1 when the detection result (the signal S13 at an L-level) indicating that there is an abnormality in the first light source 21 or the detection result (the signal S11 at an L-level) indicating that there is an abnormality in the second light source 22 is input in the period of time T1. As a result, the lighting circuit 30 can reliably stop the operation when an abnormality occurs in either of the first light source 21 or the second light source 22.

The embodiments described above are for facilitating the understanding of the present invention and are not for interpretating the present invention in a limiting manner. It goes without saying that the present invention may be changed or modified without deviating from the gist thereof and equivalents thereof are included in the present invention.

This international application claims priority to Japanese Patent Application No. 2021-202368 that is a Japanese patent application filed on December 14, 2021, and the content of Japanese Patent Application No. 2021-202368 that is a Japanese patent application is incorporated herein by reference in its entirety.

The description of particular embodiments of the present invention is presented for the purpose of exemplification. Those are not intended to be comprehensive or limit the present invention by the described form as it is. It is obvious to a person skilled in the art that various modifications and changes can be made with reference to the content described above.

### [Reference Signs List]

- 10: turn signal lamp
- 21: first light source
- 22: second light source
- 30: lighting circuit
- 40: VCC circuit
- 41: linear regulator
- 42: switching regulator
- 43: first control circuit
- 44: second control circuit
- 45, 46: disconnection detection circuit
- 47: light-off circuit
- 51, 52: resistor
- 53: comparator
- 61, 62: inverter
- 65, 66: diode
- 101: battery
- 110: body control module (BCM)
- 111: switch
- 115: disconnection detection circuit
- A to H: terminal
- D1 to D7: light emitting element
- C1 to C3: capacitor
- D11 to D14: diode
- Q1: NPN transistor
- Q2: PNP transistor
- Q3: NMOS transistor
- R1 to R8: resistor
- L1: power supply line
- N1 to N4: node
- SW1: switch
- Vbat: power supply voltage
- Vt: turn voltage

## Claims

1. A lighting circuit applied to a vehicle lighting tool, the lighting circuit comprising:
a power supply line to which power supply voltage is supplied in a first period of time out of a predetermined cycle including the first period of time and a second period of time, the supply of the power supply voltage being stopped in the second period of time;
a regulator that supplies driving current to a light source based on the power supply voltage across the power supply line;
a detection circuit that detects whether there is an abnormality in the light source;
a signal output circuit that operates based on the power supply voltage across the power supply line and outputs a signal according to a detection result of the detection circuit; and
a control circuit that stops an operation of the regulator when the signal indicating that there is an abnormality in the light source is output,
wherein the signal output circuit holds, when the detection result indicating that there is an abnormality in the light source is input in the first period of time, the signal indicating that there is an abnormality in the light source regardless of whether the power supply voltage is supplied to the power supply line.

2. The lighting circuit according to claim 1, wherein the signal output circuit includes:
a charging circuit that charges the first capacitor when the detection result indicating that there is an abnormality in the light source is input in the first period of time; and
a holding circuit that includes the first capacitor and holds the signal indicating that there is an abnormality in the light source when charging voltage across the first capacitor reaches a predetermined level.

3. The lighting circuit according to claim 2,
wherein the holding circuit includes:
a first transistor that has a control electrode connected to the first capacitor and changes a state when the charging voltage across the first capacitor reaches the predetermined level; and
a first resistor parallelly connected to the first capacitor,
wherein the first resistor has a resistance value with which the charging voltage across the first capacitor does not become lower than the predetermined level during the second period of time.

4. The lighting circuit according to claim 3, wherein the charging circuit includes:
a second transistor that is turned off based on the detection result indicating that there is an abnormality in the light source in the first period of time; and
a second resistor that supplies charging current to the first capacitor when the second transistor is turned off.

5. The lighting circuit according to claim 4, further comprising:
a second capacitor connected to a node to which the second transistor and the second resistor are connected; and
a diode having an anode connected to the node and a cathode connected to the first capacitor.

6. A vehicle lighting tool, comprising:
the light source; and
the lighting circuit according to any one of claims 1 to 5.

7. Alighting circuit, comprising:
a power supply line to which power supply voltage is supplied in a first period of time out of a predetermined cycle including the first period of time and a second period of time, the supply of the power supply voltage being stopped in the second period of time;
a first regulator that supplies first driving current to a first light source based on the power supply voltage across the power supply line;
a first detection circuit that detects whether there is an abnormality in the first light source;
a second regulator that supplies second driving current to a second light source based on the power supply voltage across the power supply line;
a second detection circuit that detects whether there is an abnormality in the second light source;
a signal output circuit that operates based on the power supply voltage across the power supply line and outputs a signal based on a first detection result of the first detection circuit and a second detection result of the second detection circuit;
a first control circuit that stops an operation of the first regulator when the signal indicating that there is an abnormality in either of the first light source or the second light source is output; and
a second control circuit that stops an operation of the second regulator when the signal indicating that there is an abnormality in either of the first light source or the second light source is output,
wherein the signal output circuit holds the signal indicating that there is an abnormality in either of the first light source or the second light source regardless of whether the power supply voltage is supplied to the power supply line when the first detection result indicating that there is an abnormality in the first light source or the second detection result indicating that there is an abnormality in the second light source is input in the first period of time.
